# EUROPEAN PATENT SPECIFICATION

(11) **EP 2 398 268 B1**
(45) Date of publication and mention of the grant of the patent: **25.12.2013**
(21) Application number: 10290327.5
(22) Date of filing: 16.06.2010
(51) Int. Cl.: H04W 28/18, H04W 24/02

(54) **Method and apparatus of setting a plurality of parameters in a wireless telecommunication network**
Verfahren und Vorrichtung zur Einstellung mehrerer Parameter in einem drahtlosen Telekommunikationsnetz
Procédé et appareil de configuration d'une pluralité de paramètres dans un réseau de communication sans fil

(43) Date of publication of application: 21.12.2011
(73) Proprietor: Alcatel Lucent, 75007 Paris (FR)
(72) Inventor: Karla, Ingo, Dr., 46514 Schermbeck (DE); Kuehn, Edgar Wolfram, Dr., 70563 Stuttgart (DE)
(74) Representative: Wetzel, Emmanuelle

(56) References cited:
- EP-A1- 2 166 796
- WO-A1-2009/041498
- US-A1- 2004 266 442

## Description

### Field of the invention

The invention relates to the field of wireless telecommunication, more specifically to self-organizing networks in wireless telecommunication.

### Background and related art

In self-organizing networks parameters of the wireless telecommunication may be adapted by base stations, cells and/or central entities of the wireless telecommunication network. No human interaction is necessary for the wireless telecommunication in the wireless telecommunication network.

EP 2 166 796 A1 discloses a method for adjusting a parameter value for controlling a handover of a user equipment between a first and a second base station of a telecommunication network. The method comprises providing policy information about a desired nominal operational condition of the network by an operator to the first and the second base station, determining a first and second optimized parameter value for carrying out the handover based on the provided policy information, transmitting an information message between the first and the second base station, wherein the information message is indicative for an intended change of the first and/or the second optimized parameter value, and adjusting the first optimized parameter value by means of the first base station and/or the second optimized parameter value by means of the second base station in a coordinated manner based on the transmitted information message. It is further described a base station and a computer program for carrying out and controlling, respectively, the described method.

US 2004/0266442 A1 discloses a method for determining relevant key performance indicators for a specific entity within the network as well as first parameters, which influence the key performance indicators. A number of entities similar to said specific entity is selected, wherein relevant key performance indicators are associated to every entity. The key performance indicators as well as the selected number of entities are used as elements in a first cost function, i.e. said first cost function is calculated on the basis of the KPI and the number of entities. Said first cost function is calculated in order to evaluate the network performance. Accordingly, since said first parameters directly relate to the key performance indicators, the network performance will depend on the values of said first parameters. Thereafter the values of said first parameters are adjusted, so that a second set of values of said first parameters are obtained. The key performance indicators are determined again but this time on the basis of the second values of said first parameters and said first cost function is recalculated on the basis of these key performance indicators. The result of said first cost function calculated on the basis of said first values of said first parameters is compared to the result of said first cost function recalculated on the basis of said second values of said first parameters. This comparison is carried out to determine whether the network performance has improved. When the network performance has improved due to the adjusting of said first parameters, said second values of said first parameters are adopted as permanent parameters.

### Summary of the invention

It is the object of the present invention to provide an improved method of setting a plurality of wireless telecommunication parameters in a wireless telecommunication network, an improved base station apparatus, an improved computer readable storage medium, and an improved wireless telecommunication system. This object is achieved by the method, the base station apparatus, the computer readable storage medium, and the wireless telecommunication system according to the independent claims 1,11,12 and 13 respectively. Embodiments of the invention are given in the dependent claims.

The invention provides a method of setting a plurality of wireless telecommunication parameters in a wireless telecommunication network. The method comprises a first step of setting a first parameter of the plurality of wireless telecommunication parameters in a first cell by a network entity. The network entity may for example be an operation and maintenance centre of the wireless telecommunication network or a base station or any other entity of the wireless telecommunication infrastructure. The first parameter may be set manuaiiy or automatically. This setting step may for example be performed by a network operator. The network operator may want to set the first parameter independently of a self-organizing structure of the wireless telecommunication network, because the corresponding parameter found by the self-organizing network may not be the optimal parameter and/or the network operator may want to test if another parameter would improve wireless telecommunication in the wireless telecommunication network.

Then, an algorithm is run for optimizing at least one second parameter of the plurality of wireless telecommunication parameters in the first and/or at least one second cell dependent on the first parameter. In other words, the first parameter is used as the basis for a self-organizing algorithm of the network for optimizing at least one second parameter. It is to be noted that the at least one second parameter may be a parameter in the same cell as the first parameter or a parameter in a cell different from the first cell.

This method allows network operators to manually change a parameter in the wireless telecommunication network. This may be advantageous when network errors should occur and the self-organizing network should not able to solve the problems related to these errors. A human being may be able to solve such problems by setting a parameter to a certain value not found by the self-organizing network. After the first parameter has been set the network optimizes other parameters again by performing a self-organizing algorithm. Thus, the network operator may intervene in case that he wants to configure particular parameters and/or in the case of network problems and afterwards the network organizes itself again.

According to embodiments of the invention the first parameter is a fixed parameter. This means, that the first parameter cannot be changed by an algorithm of the self-organizing network after having been set by the network entity. In other words, the first parameter is not changeable by the algorithm for optimizing the at least one second parameter.

According to embodiments of the invention the first parameter is only fixed for a first time period. This means that the first parameter is not fixed after the first time period anymore and may be changed by an algorithm for optimizing parameters in the wireless telecommunication network. This is advantageous because after some time network conditions may have changed and a change of the first parameter by an algorithm of the self-organizing network may be advantageous instead of leaving the first parameter fixed.

According to embodiments of the invention the network entity may be caused to set the first parameter by a higher priorized SON algorithm. In other words, a higher priorized SON algorithm may set the first parameter, which then can not be changed by a lower priorized SON algorithm. The herein described algorithm for optimizing the at least one second parameter is for example such a lower priorized SON algorithm.According to embodiments of the invention the first parameter is set by the network entity to a fixed value with a trigger condition. When this trigger condition is fulfilled, the state of the first parameter is changed from "fixed" to "non-fixed". A non-fixed parameter may be changed by any SON algorithm. In other words, the state of the first parameter may be changed when the network entity is informed about a fulfilled trigger condition. In other words, the first parameter is only fixed until the network entity resets the first parameter.

This is advantageous because the first parameter has been set for some reason and the SON does not know about this reason. Thus, it is advantageous that only that network entity, which has set the first parameter as a fixed parameter, is able to change the parameter state. The network entity knows why the first parameter has been set and the network entity also knows when it could be advantageous to change the first parameter again.

According to embodiments of the invention the setting of the first parameter overrules any other setting having been set for the first parameter previously. In other words, the first parameter may be set manually or automatically without any restriction and/or without regard to other settings having been set before manually or automatically by the self-organizing network.

According to embodiments of the invention the first cell transmits a first signal to the at least one second cell. The first signal is indicative of the first parameter. Thus, the at least one second cell knows about the first parameter and may run the algorithm for optimizing at least one second parameter. Even if the algorithm is run in the at least one second cell, the algorithm is adapted to change parameters of the first cell except for the first parameter. Additionally, the first signal may be indicative of the first parameter being fixed. In this case, the at least one second cell knows that the first parameter cannot be changed by the algorithm for optimizing at least one second parameter. This is also taken into account for optimizing the at least one second parameter. Further, the first signal may also be indicative of the first time period. Thus, the second cell knows when the first parameter may be changed again by an algorithm of the self-organizing network.

According to embodiments of the invention the algorithm for optimizing the at least one second parameter in the first and/or the at least one second cell is performed in the first cell. This is advantageous because no first signal has to be transmitted to the at least one second cell. The first cell knows about the first parameter and that the first parameter is fixed and takes this into account for the algorithm for optimizing the at least one second parameter. It is to be noted that the algorithm may optimize parameters in the first and/or the at least one second cell. The location where the algorithm is performed does not limit the parameters taken into account for the algorithm. A further benefit of running the algorithm directly in the first cell is that the algorithm may then optimize a local area of several surrounded cells. The surrounded cells are all cells which are potentially directly impacted by the fixed first parameter. Thus, a parameter optimization procedure in the first cell may already achieve to successfully adapt parameters of several affected surrounding cells.

According to embodiments of the invention the at least one second cell transmits a second signal to the first cell. The second signal is indicative of changing the first parameter. Before the second signal is transmitted to the first cell, the second cell has determined by running the algorithm for optimizing at least one second parameter that the first parameter shall be changed. The second cell only performs this step, when it is unknown to the second cell that the first parameter is a fixed parameter. This may be the case for example because the first cell has not transmitted the first signal to the second cell or the second cell did not receive the first signal from the first cell. The first cell transmits a third signal in response to the second signal to the at least one second cell. The third signal is indicative of not changing the first parameter. The second cell stores information about the first parameter being fixed and reruns the algorithm dependent on the first parameter. In other words, the first cell tells the second cell that the first parameter is fixed and the second cell has to rerun the algorithm taking into account the first parameter as being fixed. The result of the rerun algorithm may be different for a plurality of parameters because usually parameters of neighboring base stations depend on each other.

According to embodiments of the invention the first cell does not change the first parameter after having received the second signal. The second cell stores information about the first parameter being fixed and reruns the algorithm dependent on the first parameter. In this embodiment the first cell does not react to the second signal from the second cell. The second cell notices that the first cell does not change the first parameter because no message is received from the first cell that the first parameter is changed. The first and the second cell may also exchange information about their parameters regularly. When such a regular parameter update is received from the first cell by the second cell, the second cell knows that the first cell did not change the first parameter. The reactions of the second cell to the first cell not changing the first parameter is in both cases - with or without the third signal - similar. The second cell learns that the first parameter is a fixed parameter and reruns the algorithm taking into account the fact that the first parameter is fixed.

In other words, the first cell does not notify the second cell of the fixed first parameteror the second cell has - for any reason - not received the information, that the first parameter in the first cell is fixed. But the fact that the first parameter is fixed will later be concluded or assumed by the second cell. After an indicated change of the first parameter by the second cell, the first cell does not indicate to the second cell that the first parameter is changed. Thus, because no such indication is received by the second cell, the second cell knows that the first cell did not change the first parameter. Then, the second cell stores information about the first parameter being fixed. Consequently, the fact that the first parameter is fixed is noticed by the second cell, although no notification is received from the first cell by the second cell.

This can also be described as follows:
The second cell does not know that the first cell cannot change its first parameter. Then the second cell sends a message to the first cell that the first cell shall change its first parameter. But then the first cell does not carry out that actions which were expected by the second cell, i.e. the first cell does not change the first parameter as requested. This non-expected behaviour of the first cell could for example be noticed by the second cell when the second cell does not receive from the first cell the parameter change confirmation message of if such a confirmation message is part of the implemented protocol but has been lost or in case the confirmation message is not implemented due to missing functionality implemented in the first cell; and/or the second cell obtains the information about the setting of the first parameter in the first cell within the next parameter information message. Based on such observations, the second cell then detects that the requested parameter change has not been carried out. Then the second cell assumes, that the first cell cannot change its first parameter, and considers this situation for future parameter optimization actions. There is the possibility that the second cell will re-evaluate or re-check this taken assumption after a certain amount of time.

Alternatively, the first and the second cell exchange information about their parameters regularly. In this case, the second cell notices that the first cell did not change the first parameter when such a regular information is received.

According to embodiments of the invention the second cell resends the second signal after a second time period. It is to be noted that the second time period is a 2^{nd} time period in the sense of ordinal numbers. This is advantageous for testing if the first parameter is still fixed or if it has changed its state to a non-fixed parameter. Alternatively or additionally, the first cell informs the second cell when the first parameter has changed its state to a non-fixed parameter.

According to embodiments of the invention the first parameter and/or the at least one second parameter is a range of physical resource blocks or a range of frequencies not being used for wireless telecommunication in the first cell or being used with a restricted transmission power, an antenna tilt of base stations of the first and/or the at least one second cell, or a parameter for a handover procedure of a wireless terminal between the first and the at least one second cell such as a time to trigger, a cell individual offset, or a transmission power of an antenna or a base station.

Embodiments of the invention may be applied to any parameter in wireless telecommunication networks.

According to embodiments of the invention the first parameter is used as the starting point for the algorithm. The algorithm optimizes also the first parameter. In other words, the first parameter is set by the network entity as a suggestion or a parameter range for the first parameter. The algorithm then starts optimizing the self-organizing network from this first parameter and may also determine another value differing from the first parameter set by the network entity for the first parameter.

### Brief description of the drawings

In the following preferred embodiments of the invention will be described, by way of example only, and with reference to the drawings in which:
- Figure 1: is a schematic view of a wireless telecommunication network, where a first parameter is set as a fixed parameter by a network entity;
- Figure 2: is a schematic view of a wireless telecommunication network, wherein a first base station tries to modify a first fixed parameter;
- Figure 3: is a schematic view of a wireless telecommunication network, wherein a second base station tries to change a first fixed parameter of a first base station and the first base station does not change the parameter and does not transmit an error message to the second base station; and
- Figure 4: is a block diagram of a wireless telecommunication system comprising two base stations and one network entity.

### Detailed description

Like numbered elements in these Figs. are either identical elements or perform the same function. Elements which have been discussed previously will not necessarily be discussed in later Figs. if the function is identical.

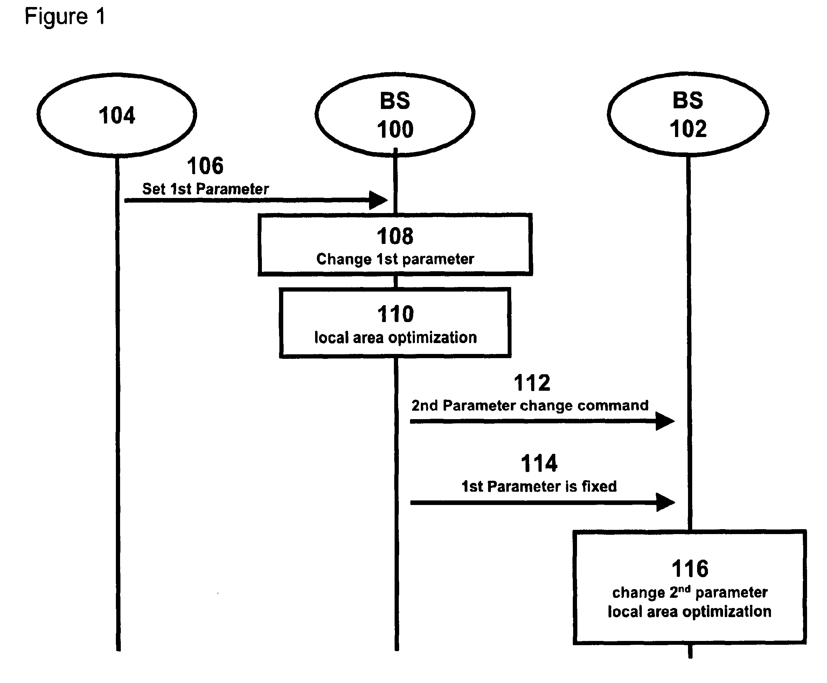

Fig. 1 is a schematic view of a wireless telecommunication system with a first base station 100 serving a first cell and a second base station 102 serving a second cell. A network entity 104, e.g. an operation and maintenance center, is also comprised by the wireless telecommunication network. The first base station 100 and the second base station 102 communicate with wireless terminals of the wireless telecommunication system and have several parameters being adjustable for this communication. Such parameters may for example by a range of physical resource blocks or a range of frequencies not being used for wireless telecommunication in the respective cell. This is advantageous because a neighboring cell may use these resource blocks or ranges of frequencies for wireless telecommunication in its border region. Other parameters being adjustable may for example be the antenna tilt of the base station, a parameter for a handover procedure of a wireless terminal such as a time to trigger, or a cell individual offset, or a transmission power of the antenna of the base station.

In general the wireless telecommunication system is a self-organizing network (SON), which means that parameters of the first base station 100 and the second base station 102 are adjusted by the network itself with the following exception. The network entity 104 sets a first parameter of the first base station 100 by transmitting a first message 106 from the network entity 104 to the first base station 100. This is contrary to common SON procedures. The first base station 100 then changes in step 108 the corresponding parameter to the value indicated in the first message 106. For example, the first message 106 is indicative of not using a first range of frequencies for wireless telecommunication in the first cell and the first base station has stored that a second range of frequencies is not used for wireless telecommunication in the first cell. Then, the first base station changes this parameter from not using the second range of frequencies for wireless telecommunication in the first cell to not using the first range of frequencies not used for wireless telecommunication in the first cell.

Then, in step 110 the first base station runs a local area optimization algorithm. This algorithm optimizes the parameters of the first base station and of at least one further base station, e.g. the second base station 102. If the algorithm determines that the optimum parameters are already used by the first and the second base station, no further optimization is performed. The algorithm is run, just that the first parameter is fixed and is not changed by the algorithm. The algorithm also considering the fixed parameter and optimizes other parameters around this fixed one. The algorithm has the possibility to modify all parameters except the fixed one. The local area optimization algorithm 110 takes this into account for optimizing the other parameters. For example the local area optimization 110 accordingly to a certain SON scheme would determine that it would be better to change the first parameter to another value and also to change a second parameter in the second base station to another value. In this case, the base station 100 knows that the first parameter cannot be changed and this could also lead to the fact that the second parameter in the second base station 102 should be optimized to a different value or should not be changed.

If the local area optimization algorithm 110 determines to change a second parameter of the second base station 102, a second message 112 is transmitted from the first base station 100 to the second base station 102. Additionally the first base station 100 transmits a third message 114 to the second base station 102. The third message is indicative of the first parameter of the first base station 100 being fixed. The third message may also be referred to as the first signal. Thus, the second cell also knows that the first parameter in the first cell is fixed and cannot be changed. The value of the first parameter is also transmitted via the third message 114. The knowledge about the first parameter and the value of the first parameter in the second base station 102 may be used for an optional additional optimization algorithm in the second base station 102.

In step 116 the second base station 102 changes the second parameter to the value indicated in the second message 112. This step is performed analogously to step 108 in the first base station 100. Additionally, the second base station 102 may run another optimization algorithm for optimizing further parameters in the second cell and/or a neighboring cell of the second cell.

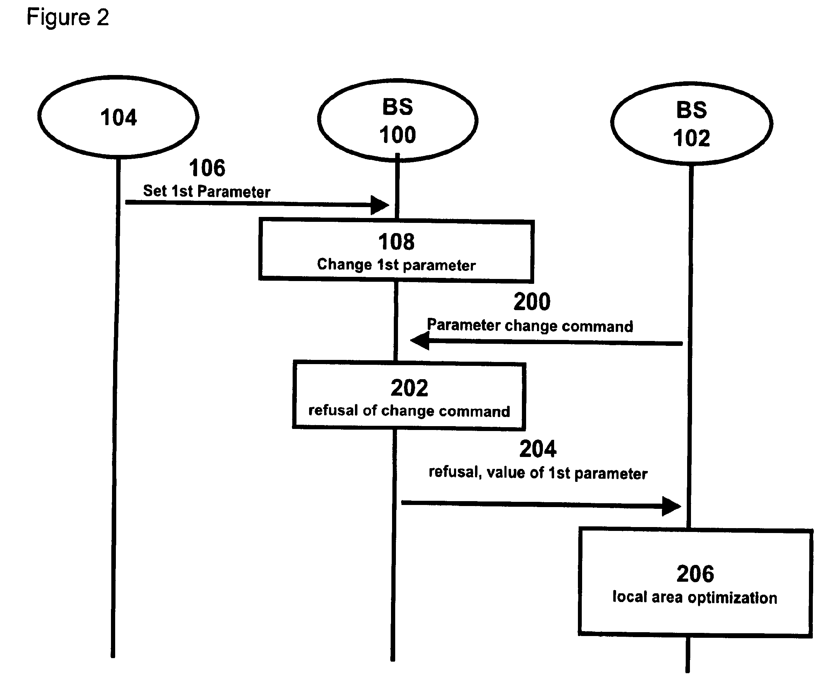

Fig. 2 is a schematic view of another embodiment of a method according to the invention. Shown again is a wireless telecommunication network with a first base station 100, a second base station 102 and a network entity 104 in a schematic view. The wireless telecommunication system of Fig. 2 is similar to the system of Fig. 1. Usually parameters in the wireless telecommunication system are set by an SOM scheme and an external intervention, e.g. by a human, is possible by setting a first fixed parameter via network entity 104. The first fixed parameter is transmitted in a first message 106 to the first base station 100 as already explained in Fig. 1. The first base station 100 then changes the first parameter to the newly received value in step 108 or - if that value was previously already configured - then this value is kept but it is marked to be fixed and non-changeable.. At this point the second base station does not know, that the first base station has this parameter fixed. Then the second base station 102 sends a parameter change command 200 to the first base station 100. The parameter change command 200 is indicative of changing the first parameter in the first base station 100. The parameter change command 200 may be sent for example by the second base station 102 to the first base station 100 after an optimization algorithm performed in the second base station 102. The parameter change command 200 may also be referred to as the second signal.

In step 202 the first base station 100 decides not to accept the parameter change command 200 because the first parameter is stored as being fixed in the first base station 100. In other words the parameter change command is refused by the first base station 100. The first base station 100 then transmits a fourth message to the second base station 102. The fourth message 204 is indicative of the refusal of the change command. The fourth message may also be indicative of the value of the fixed first parameter. The fourth message 204 may also be referred to as the third signal. Thus, the second base station 102 knows after having received the fourth message 204 that the first parameter is fixed in the first base station 100 and the value of this fixed parameter. As explained in Fig. 1 this knowledge may be used in further optimization algorithms performed in the second base station 102.

In step 206 the second base station 102 stores information about the value of the first parameter in the first base station 100 and the fact that it is a fixed parameter. Then, the second base station 102 analyzes the situation without the parameter change and possibly restarts a new optimization algorithm taking into account the value of the first parameter and the fact that this parameter is not changeable.

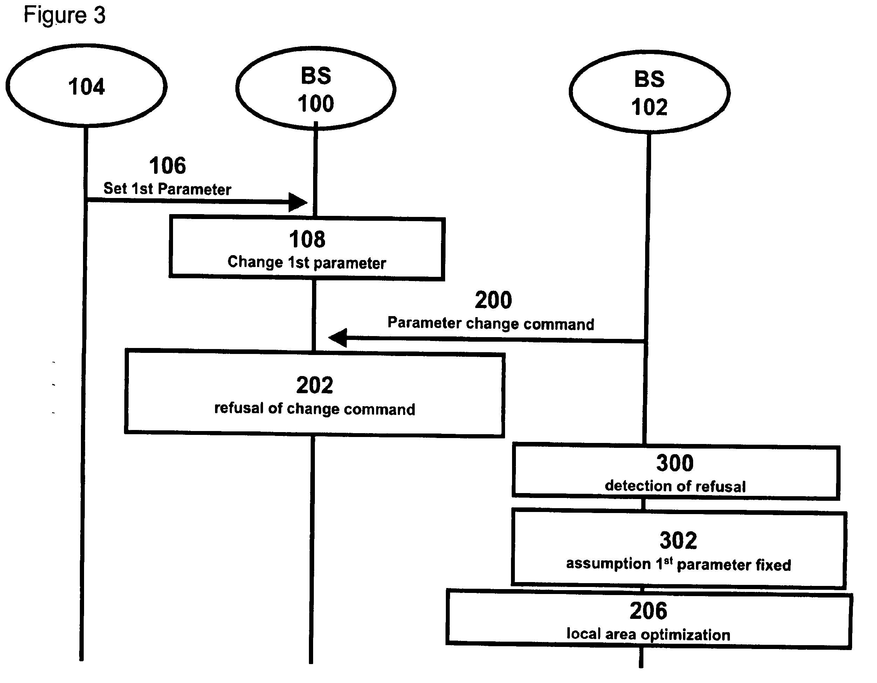

Fig. 3 is a schematic view of a wireless telecommunication network similar to the wireless telecommunication network of Fig. 2. The operation and maintenance center 104 sets a first parameter of the first base station 100 by transmitting first message 106. the first parameter is then changed in step 108 and after changing the first parameter the first base station 100 receives a parameter change command 200 from the second base station 102.

Then, in step 202 the first base station 100 refuses to change the first parameter because it is a fixed parameter. It is to be noted that the first base station 100 does not transmit the refusal to the second base station 102. The first base station 100 simply ignores the parameter change command in step 202.

After some time the second base station 102 detects in step 300 that the first base station 100 did not change the first parameter. This may for example be detected because the first base station 100 informs the second base station 102 regularly about its parameters or because the second base station 102 did not receive information about the parameter change in the first base station 100 as it would have been the case if the first base station 100 would have changed the first parameter. Then, in step 302 the second base station assumes that the first parameter is fixed in the first base station 100 and stores this information. This assumption will be rechecked again after a certain time period. After this time period the second base station 102 considers that the parameter may no longer be fixed and keeps this parameter flexible again within subsequent optimization procedures. This then may lead again to that the second base station sends again a parameter change command 200 to the first base station 100.

Then, the second base station 102 reruns a local area optimization 206 taking into account the value of the first parameter of the first base station 100 and the fact that the first parameter of the first base station 100 is fixed. This step is performed analogously to step 206 in Fig. 2.

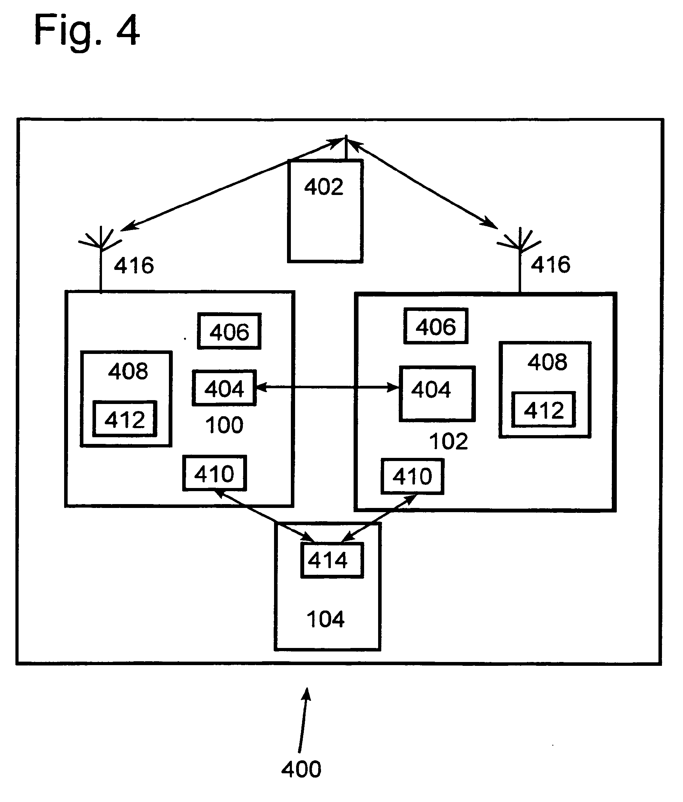

Fig. 4 is a block diagram of a wireless telecommunication network 400 comprising a first base station 100, a second base station 102, a wireless terminal 402, and a network entity 104. The wireless terminal 402 may for example by a mobile phone, a mobile computer or a PDA. The first base station 100 and the second base station 102 both have each a first interface 404 for communicating with the other base stations, a processor 406, a data storage 408, and a second interface 410 for communicating with the network entity 104. The processor 406 is adapted to execute a program 412. The program 412 is stored in the respective data storage 408. The network entity 104 comprises a third interface for communicating with the first base station 100 and the second base station 102. The first base station 100 and the second base station 102 communicate with the wireless terminal 402 via a respective antenna 416.

In operation, the first and the second base stations are adapted to adjust their wireless telecommunication parameters on their own in a self-organizing manner. This self-organizing network algorithm is performed by executing program 412 in data storage 408 by processor 406. The network entity 104 communicates with the first base station 100 and the second base station 102 via interfaces 410 and 414. The network entity is adapted for sending a first message to the first base station 100, the first message being indicative of setting a first parameter to a fixed value. Then, this parameter is stored as being fixed in data storage 408. Further optimization algorithms according to self-organizing network schemes may be performed by processor 406 in base station 100 and/or by processor 406 in base station 102. If a parameter shall be changed according to an optimization algorithm the respective base station transmits a signal via interfaces 404. All parameters may be changed, which are not denoted as being fixed. When a fixed parameter from the first base station 100 shall be changed it is not changed and optionally an error message is transmitted from base station 100 to base station 102 via interfaces 404. After a certain time period the fixed parameter is not fixed anymore. In this case the information about the first parameter being fixed is deleted from data storage 408 in first base station 100.

**List of reference numerals**

| | |
|---|---|
| 100 | First base station |
| 102 | Second base station |
| 104 | network entity |
| 106 | First message |
| 108 | Change parameter |
| 110 | Local area optimization |
| 112 | Second message |
| 114 | Third message |
| 116 | Change parameter |
| 200 | Parameter change command |
| 202 | Parameter change refusal |
| 204 | Fourth message |
| 206 | Local area optimization |
| 300 | Detection of refusal |
| 302 | Assumption |
| 400 | wireless telecommunication network |
| 402 | Wireless terminal |
| 404 | First interface |
| 406 | Processor |
| 408 | Data storage |
| 410 | Second interface |
| 412 | Program |
| 414 | Third interface |
| 416 | Antenna |

## Claims

1. Method of setting a plurality of wireless telecommunication parameters in a wireless telecommunication network (400), wherein the method comprises the following steps:
- setting (106) a first parameter of the plurality of wireless telecommunication parameters in a first cell by a network entity (104), wherein the first parameter is fixed for a first time period, wherein the fixed first parameter cannot be changed by an algorithm of a self-organizing network after having been set by the network entity, and wherein the first parameter may be changed by the algorithm after the first time period;
- running (110; 206) an algorithm for optimizing at least one second parameter of the plurality of wireless telecommunication parameters in the first and/or at least one second cell dependent on the first parameter.

2. Method according to claim 1, wherein the first parameter is only fixed until the network entity resets the first parameter.

3. Method according to any one of the preceding claims, wherein the setting of the first parameter overrules (106) any other setting having been set for the first parameter previously.

4. Method according to any one of the preceding claims, wherein the first cell transmits a first signal (114) to the at least one second cell, the first signal being indicative of the first parameter.

5. Method according to any one of the preceding claims, wherein the algorithm for optimizing the at least one second parameter in the first and/or the at least one second cell is performed in the first cell.

6. Method according to any one of the preceding claims, wherein the at least one second cell transmits a second signal (200) to the first cell, the second signal being indicative of changing the first parameter.

7. Method according to claim 6, wherein the first cell transmits a third signal (204) to the at least one second cell in response to the second signal, the third signal being indicative of not changing the first parameter, wherein the second cell stores information about the first parameter being fixed and reruns the algorithm dependent on the first parameter.

8. Method according to claim 6, wherein the first cell does not change the first parameter after having received the second signal, and wherein the second cell stores information about the first parameter being fixed and reruns the algorithm dependent on the first parameter.

9. Method according to any one of the preceding claims, wherein the first parameter and/or the at least one second parameter is a range of physical resource blocks or a range of frequencies not being used for wireless telecommunication in the first cell or being used with a restricted transmission power, an antenna tilt of base stations of the first and/or the at least one second cell, or a parameter for a handover procedure of a wireless terminal between the first and the at least one second cell such as a time to trigger, or a cell individual offset, or a transmission power of an antenna or a base station..

10. Method according to claim 1, wherein the first parameter is used as the starting point for the algorithm, and wherein the algorithm optimizes also the first parameter.

11. Base station apparatus (100; 102) in a wireless telecommunication network, the base station comprising means (406) for running an algorithm for optimizing at least one parameter of a plurality of wireless telecommunication parameters dependent on a first parameter, wherein the first parameter has been set by a network entity (104), and wherein the first parameter is fixed for a first time period, wherein the fixed first parameter cannot be changed by the algorithm of a self-organizing network after having been set by the network entity, and wherein the first parameter may be changed by the algorithm after the first time period.

12. Computer-readable storage medium (408) containing instructions that when executed by a base station apparatus according to claim 11 cause the base station apparatus to perform a method of setting a plurality of wireless telecommunication parameters in a wireless telecommunication network, the method comprising running an algorithm for optimizing at least one parameter of a plurality of wireless telecommunication parameters dependent on a first parameter, wherein the first parameter has been set by a network entity, and wherein the first parameter is fixed for a first time period, wherein the fixed first parameter cannot be changed by the algorithm of a self-organizing network after having been set by the network entity, and wherein the first parameter may be changed by the algorithm after the first time period.

13. Wireless telecommunication system (400) comprising at least two base stations according to claim 11 and one network entity.

## Patentansprüche

1. Verfahren zur Einstellung mehrerer Parameter für die drahtlose Telekommunikation in einem drahtlosen Telekommunikationsnetzwerk (400), wobei das Verfahren die folgenden Schritte umfasst:
- Einstellen (106) eines ersten Parameters der mehreren Parameter für die drahtlose Telekommunikation in einer ersten Zelle durch eine Netzwerkentität (104), wobei der erste Parameter für einen ersten Zeitraum festgelegt wird, wobei der festgelegte erste Parameter nicht durch einen Algorithmus eines selbstorganisierenden Netzwerks geändert werden kann, nachdem er von der Netzwerkentität eingestellt wurde, und wobei der erste Parameter nach Ablauf des ersten Zeitraums durch den Algorithmus geändert werden kann;
- Ausführen (110; 206) eines Algorithmus zur Optimierung mindestens eines zweiten Parameters der mehreren Parameter für die drahtlose Telekommunikation in der ersten und/oder mindestens einer zweiten Zelle in Abhängigkeit von dem ersten Parameter.

2. Verfahren nach Anspruch 1, wobei der erste Parameter bis zu dem Zeitpunkt festgelegt wird, zu welchem die Netzwerkentität den ersten Parameter erneut einstellt.

3. Verfahren nach einem beliebigen der vorstehenden Ansprüche, wobei die Einstellung des ersten Parameters jede andere zuvor für den ersten Parameter vorgenommene Einstellung aufhebt (106).

4. Verfahren nach einem beliebigen der vorstehenden Ansprüche, wobei die erste Zelle ein erstes Signal (114) an die mindestens eine zweite Zelle überträgt, wobei das erste Signal für den ersten Parameter indikativ ist.

5. Verfahren nach einem beliebigen der vorstehenden Ansprüche, wobei der Algorithmus zur Optimierung des mindestens einen zweiten Parameters in der ersten und/oder der mindestens einen zweiten Zelle in der ersten Zelle ausgeführt wird.

6. Verfahren nach einem beliebigen der vorstehenden Ansprüche, wobei die mindestens eine zweite Zelle ein zweites Signal (200) an die erste Zelle überträgt, wobei das zweite Signal für die Änderung des ersten Parameters indikativ ist.

7. Verfahren nach Anspruch 6, wobei die erste Zelle in Reaktion auf das zweite Signal ein drittes Signal (204) an die mindestens eine zweite Zelle überträgt, wobei das dritte Signal dafür indikativ ist, dass der erste Parameter nicht geändert wurde, wobei die zweite Zelle Informationen über den festgelegten ersten Parameter speichert und den Algorithmus in Abhängigkeit von dem ersten Parameter erneut ausführt.

8. Verfahren nach Anspruch 6, wobei die zweite Zelle den ersten Parameter nach Empfang des zweiten Signals nicht ändert, und wobei die zweite Zelle Informationen über den festgelegten ersten Parameter speichert und den Algorithmus in Abhängigkeit von dem ersten Parameter erneut ausführt.

9. Verfahren nach einem beliebigen der vorstehenden Ansprüche, wobei der erste Parameter und/oder der mindestens eine zweite Parameter ein Bereich von physischen Ressourcenblöcken oder ein Bereich von Frequenzen, die für die drahtlose Telekommunikation in der ersten Zelle nicht benutzt oder mit einer beschränkten Sendeleistung benutzt werden, eine Antennenneigung von Basisstationen der ersten und/oder der mindestens einen zweiten Zelle, oder ein Parameter für einen Handover-Vorgang eines drahtlosen Endgeräts zwischen der ersten und der mindestens einen zweiten Zelle wie beispielsweise ein Triggerzeitpunkt, oder ein zellenindividueller Versatz, oder eine Sendeleistung einer Antenne oder einer Basisstation ist.

10. Verfahren nach Anspruch 1, wobei der erste Parameter als Startpunkt für den Algorithmus verwendet wird, und wobei der Algorithmus ebenfalls den ersten Parameter optimiert.

11. Basisstationsvorrichtung (100; 102) in einem drahtlosen Telekommunikationsnetzwerk, wobei die Basisstation Mittel (406) zum Ausführen eines Algorithmus umfasst, um mindestens einen Parameter einer Vielzahl von Parametern für die drahtlose Telekommunikation in Abhängigkeit von einem ersten Parameter zu optimieren, wobei der erste Parameter von einer Netzwerkentität (104) eingestellt wurde, und wobei der erste Parameter für einen ersten Zeitraum festgelegt wird, wobei der festgelegte erste Parameter nach dessen Einstellung durch die Netzwerkentität nicht durch den Algorithmus eines selbstorganisierenden Netzwerks geändert werden kann, und wobei der erste Parameter nach Ablauf des ersten Zeitraums durch den Algorithmus geändert werden kann.

12. Computerlesbares Speichermedium (408) mit Anweisungen, welche bei der Ausführung durch eine Basisstationsvorrichtung gemäß Anspruch 11 bewirken, dass die Basisstationsvorrichtung ein Verfahren zur Einstellung einer Vielzahl von Parametern für die drahtlose Telekommunikation in einem drahtlosen Telekommunikationsnetzwerk durchführt, wobei das Verfahren das Ausführen eines Algorithmus zur Optimierung mindestens eines Parameters einer Vielzahl von Parametern für die drahtlose Telekommunikation in Abhängigkeit von einem ersten Parameter umfasst, wobei der erste Parameter von einer Netzwerkentität eingestellt wurde, und wobei der erste Parameter für einen ersten Zeitraum festgelegt wird, wobei der festgelegte erste Parameter nach dessen Einstellung durch die Netzwerkentität nicht durch den Algorithmus eines selbstorganisierenden Netzwerks geändert werden kann, und wobei der erste Parameter nach Ablauf des ersten Zeitraums durch den Algorithmus geändert werden kann.

13. Drahtloses Telekommunikationssystem (400), welches mindestens zwei Basisstationen gemäß Anspruch 11 und eine Netzwerkentität umfasst.

## Revendications

1. Procédé de configuration d'une pluralité de paramètres de télécommunication sans fil dans un réseau de télécommunication sans fil (400), le procédé comprenant les étapes suivantes :
- configurer (106) un premier paramètre de la pluralité de paramètres de télécommunication sans fil dans une première cellule par une entité de réseau (104), le premier paramètre étant fixe pendant une première période, le premier paramètre fixe ne pouvant pas être modifié par un algorithme d'un réseau auto-organisateur après qu'il a été configuré par l'entité de réseau, et le premier paramètre pouvant être modifié par l'algorithme après la première période ;
- exécuter (110 ; 206) un algorithme pour optimiser au moins un deuxième paramètre parmi la pluralité de paramètres de télécommunication sans fil dans la première cellule et/ou au moins une deuxième cellule en fonction du premier paramètre.

2. Procédé selon la revendication 1, dans lequel le premier paramètre n'est fixe que jusqu'à ce que l'entité de réseau réinitialise le premier paramètre.

3. Procédé selon l'une quelconque des revendications précédentes, dans lequel la configuration du premier paramètre annule (106) toute autre configuration qui a été définie précédemment pour le premier paramètre.

4. Procédé selon l'une quelconque des revendications précédentes, dans lequel la première cellule transmet un premier signal (114) à l'au moins une deuxième cellule, le premier signal indiquant le premier paramètre.

5. Procédé selon l'une quelconque des revendications précédentes, dans lequel l'algorithme pour optimiser l'au moins un deuxième paramètre dans la première cellule et/ou l'au moins une deuxième cellule est exécuté dans la première cellule.

6. Procédé selon l'une quelconque des revendications précédentes, dans lequel l'au moins une deuxième cellule transmet un deuxième signal (200) à la première cellule, le deuxième signal indiquant la modification du premier paramètre.

7. Procédé selon la revendication 6, dans lequel la première cellule transmet un troisième signal (204) à l'au moins une deuxième cellule en réponse au deuxième signal, le troisième signal indiquant une non modification du premier paramètre, dans lequel la deuxième cellule stocke des informations sur le premier paramètre qui est fixe et exécute à nouveau l'algorithme en fonction du premier paramètre.

8. Procédé selon la revendication 6, dans lequel la première cellule ne modifie pas le premier paramètre après qu'elle a reçu le deuxième signal, et dans lequel la deuxième cellule stocke des informations sur le premier paramètre qui est fixe et exécute à nouveau l'algorithme en fonction du premier paramètre.

9. Procédé selon l'une quelconque des revendications précédentes, dans lequel le premier paramètre et/ou l'au moins un deuxième paramètre est une plage de blocs de ressources physiques ou une plage de fréquences qui n'est pas utilisée pour la télécommunication sans fil dans la première cellule ou qui est utilisée avec une puissance de transmission limitée, une inclinaison de l'antenne de stations de base de la première cellule et/ou de l'au moins une deuxième cellule, ou un paramètre pour une procédure de transfert d'un terminal sans fil entre la première cellule et l'au moins une deuxième cellule comme un temps de déclenchement, ou un décalage individuel de cellule, ou une puissance d'émission d'une antenne ou une station de base.

10. Procédé selon la revendication 1, dans lequel le premier paramètre est utilisé comme point de départ de l'algorithme, et dans lequel l'algorithme optimise aussi le premier paramètre.

11. Appareil de station de base (100 ; 102) dans un réseau de télécommunication sans fil, la station de base comprenant des moyens (406) pour exécuter un algorithme afin d'optimiser au moins un paramètre parmi une pluralité de paramètres de télécommunication sans fil en fonction d'un premier paramètre, le premier paramètre ayant été configuré par une entité de réseau (104), et le premier paramètre étant fixe pendant une première période, le premier paramètre fixe ne pouvant pas être modifié par l'algorithme d'un réseau auto-organisateur après qu'il a été configuré par l'entité de réseau, et le premier paramètre pouvant être modifié par l'algorithme après la première période.

12. Support de stockage lisible par ordinateur (408) contenant des instructions qui, lorsqu'elles sont exécutées par un appareil de station de base selon la revendication 11 entraînent l'exécution par l'appareil de station de base d'un procédé de configuration d'une pluralité de paramètres de télécommunication sans fil dans un réseau de télécommunication sans fil, le procédé comprenant l'exécution d'un algorithme pour optimiser au moins un paramètre parmi une pluralité de paramètres de télécommunication sans fil en fonction d'un premier paramètre, le premier paramètre ayant été configuré par une entité de réseau, et le premier paramètre étant fixe pendant une première période, le premier paramètre fixe ne pouvant pas être modifié par l'algorithme d'un réseau auto-organisateur après qu'il a été configuré par l'entité de réseau, et le premier paramètre pouvant être modifié par l'algorithme après la première période.

13. Système de télécommunication sans fil (400) comprenant au moins deux stations de base selon la revendication 11 et une entité de réseau.
